Europäisches Patentamt

European Patent Office

Office européen des brevets

(19)

(11) Veröffentlichungsnummer: **0 000 768**
**B1**

(12) # EUROPÄISCHE PATENTSCHRIFT

(45) Veröffentlichungstag der Patentschrift: 28.07.82

(51) Int. Cl.³: **G 05 D 23/13**

(21) Anmeldenummer: 78100569.9

(22) Anmeldetag: 02.08.78

(54) Mischvorrichtung für Kalt- und Warmwasser.

(30) Priorität: 10.08.77 DE 7724834 U

(43) Veröffentlichungstag der Anmeldung:
21.02.79 Patentblatt 79/4

(45) Bekanntmachung des Hinweises auf die Patenterteilung:
28.07.82 Patentblatt 82/30

(84) Benannte Vertragsstaaten:
BE CH FR NL

(56) Entgegenhaltungen:
CH - A - 434 914
DE - A - 2 151 785
DE - B - 1 272 062
DE - B - 1 288 390
DE - C - 702 208
FR - A - 2 161 177
FR - A - 2 271 472
US - A - 3 610 279
US - A - 3 792 812

Der Sanitär-Installateur, Oktober 1976, 34.
Jahrgang, Nr. 10, Titelseite, Seiten 22, 46 und
47

(73) Patentinhaber: Honeywell-Braukmann GmbH
Hardhofweg
D-6950 Mosbach (DE)

(72) Erfinder: Braukmann, Bernhard W.
Am Rosenberg 1
D-6950 Mosbach (DE)

(74) Vertreter: Rentzsch, Heinz et al,
Honeywell Europe S.A. Holding KG Patent- und
Lizenzabteilung Postfach 184
D-6050 Offenbach am Main (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Mischvorrichtung für Kalt- und Warmwasser

Die Erfindung bezieht sich auf eine Mischvorrichtung zur Verbindung mit wenigstens dem Warmwasseranschluß eines Warmwasserbereiters, mit einem Kaltwasser-Zuflußstutzen, einem Mischwasser-Abflußstutzen und einem thermostatisch gesteuerten, mittels einer Belastungsfeder beaufschlagten Schieber, an dem sich das eine Ende der Belastungsfeder abstützt, und der in einem Mischerkörper verschiebbar ist, welcher wenigstens zwei an seiner Wandung in Verschieberichtung des Schiebers hintereinander angeordnete, umlaufende Reihen von Steueröffnungen aufweist, von denen durch den Schieber jeweils nur eine vollständig abdeckbar ist, wobei am oder im Bereich eines Bodens des Schiebers wenigstens ein Durchbruch vorgesehen ist und jede Reihe von Steueröffnungen mit einem den Mischerkörper umgebenden Ringkanal in Verbindung steht, wobei außerdem der eine Ringkanal mit dem Kaltwasser-Zuflußstutzen und der andere mit dem Warmwasseranschluß des Warmwasserbereiters hydraulisch verbunden ist. Eine derartige Mischvorrichtung ist beispielsweise durch die deutsche Auslegeschrift 12 72 062 bereits bekanntgeworden. Da diese Mischvorrichtung mit zwei Absperrventilen kombiniert ist, muß ihr Schieber als Doppelkörperkolbenschieber ausgebildet werden. Außerdem verlangt diese Konstruktion eine außenliegende Belastungsfeder. Jede diese konstruktiven Maßnahmen und erst recht alle beide zusammen, haben eine unverhältnismäßig lange Bauweise in Bewegungsrichtung des Schiebers zur Folge. Dies wirkt sich zwar bei der vorbekannten Mischvorrichtung nicht unbedingt nachteilig aus, weil sie, wie gesagt, mit zwei Absperrventilen kombiniert ist, die in Längsrichtung des Schiebers bzw. des Mischerkörpers selbst relativ viel Platz benötigen.

Die Kombination einer derartigen Mischvorrichtung mit zwei insbesondere gleichzeitig mit einem einzigen Betätigungsorgan zu schließenden bzw. zu öffnenden Absperrventilen führt zu einer insgesamt sehr aufwendigen und viele Dichtungen benötigenden Konstruktion. Infolgedessen wird man auf eine solche Mischvorrichtung überall dort verzichten, wo sich das kalte und das heiße Wasser anderweitig in einfacher Weise absperren lassen. In einem solchen Falle würde aber die Mischvorrichtung ohne Absperrventile aufgrund der außenliegenden Feder und der Verwendung eines Doppelkörperkolbenschiebers den erwähnten großen Platzbedarf haben. Hierbei ist noch völlig außer Betracht gelassen, ob man auf die Absperrventile aus konstruktiven Gründen ohne weiteres verzichten kann. Sicher ist jedoch, daß man auf jeden Fall außer dem Schieber und dem Mischerkörper noch einen letzteren, konzentrisch umgebenden, in das Gehäuse der Mischvorrichtung eingeschobenen, der Buchse 12 dieser Mischvorrichtung entsprechenden Einsatz benötigt, in dem man die Ringkanäle ausbildet.

Die Aufgabe der Erfindung besteht infolgedessen darin, eine Mischvorrichtung der eingangs genannten Art so weiterzubilden, daß sich eine besonders einfache und kompakte Bauweise ergibt.

Zur Lösung dieser Aufgabe wird erfindungsgemäß vorgeschlagen, daß die Mischvorrichtung gemäß dem Oberbegriff des Anspruchs 1 entsprechend dem kennzeichnenden Teil dieses Anspruchs ausgebildet ist. Durch die Ausformung der Ringkanäle am Mischerkörper entfällt die bei der vorbekannten Mischvorrichtung notwendige, den Mischerkörper konzentrisch umgebende Buchse. Man erspart sich nicht nur deren Herstellung, sondern auch Befestigung im Gehäuse, wodurch sich in der angestrebten Weise eine Vereinfachung der Mischvorrichtung ergibt. Die Belastungsfeder kann nach innen, d.h. in den durch den Mischerkörper und den Schieber definierten Hohlraum gelegt werden, weil nunmehr auch der Mischerkörper mit einem Boden versehen und der Schieber als sogenannter Einfachschieber ausgebildet ist. Sowohl die Verwendung eines Einfachschiebers als auch die Verlegung der Belastungsfeder ins Innere des Mischorgans führt zu einer besonders kompakten und trotzdem einfachen Bauweise. Beim Einfachschieber strömt das eine Medium in der einen Endstellung um sein eines Ende, während das andere Medium in der anderen Endstellung an seinem anderen Ende vorbeiströmt. Im Gegensatz dazu strömt das eine Medium in der einen Endstellung eines Doppelkörperkolbenschiebers in eine zwischen seinen beiden Körpern gelegene Ringnut, in die das andere Medium in der anderen Endstellung ebenfalls eintritt. In der Zwischenstellung treten die Medienteilströme anteilsmäßig in diese Ringnut ein, während sie beim Einfachschieber anteilsmäßig an den beiden Enden vorbeiströmen. Die Länge des Einfachschiebers beträgt nur etwa ein Drittel der Länge eines Doppelkörperkolbenschiebers.

Eine Weiterbildung der Erfindung sieht vor, daß einer der Außenbünde dem Boden des Mischerkörpers zugeordnet ist und diesen insbesondere überragt, wobei dieser Außenbund an einer inneren Schulter des Mischergehäuses abgestützt ist und wenigstens an einer Stelle einen etwa in Achsrichtung des Schiebers verlaufenden Strömungskanal aufweist und der Boden außen vom Warmwasser angeströmt ist. Auf diese Weise läßt sich das warme Wasser sehr leicht in die hierfür vorgesehene Ringnut einleiten, und man kann infolgedessen das Gehäuse in diesem Bereich besonders einfach gestalten.

Eine weitere Ausgestaltung der Erfindung sieht vor, daß jeweils an der Innenseite der Böden des Schiebers und des Mischerkörpers ein mittiger Zentrieransatz für die als Schraubendruckfeder ausgebildete Belastungsfeder angebracht, insbesondere angeformt ist. Mann erreicht dadurch auf einfache Weise eine gute Zentrierung und ein sicheres Festhalten der Belastungsfeder im Innern des Mischorgans. Eine andere Ausbildung der Vorrichtung mit einem mittels eines Einstellorgans in Arbeitsrichtung gegen die Kraft der Belastungsfeder einstellbaren Arbeitselements ist dadurch gekennzeichnet, daß der Boden des Schiebers außen eine Zentrierbohrung besitzt, in die das freie Ende eines Arbeitskolbens des thermostatischen Arbeitselements eingreift. Auch das unmittelbare Ankuppeln des Arbeitskolbens an den Schieber führt zu der angestrebten kompakten Bauweise und dadurch zu einer einfachen Konstruktion, daß auf zwischengeschaltete Übertragungsglieder verzichtet werden kann.

Eine weitere Variante der Erfindung besteht darin, daß das Gehäuse der thermostatischen Arbeitselements in einen hülsenförmigen Halter eingesteckt ist und der Halter mit einer entgegen der Ausstoßrichtung des thermostatischen Arbeitskolbens weisenden Fläche an einem Exzenter oder exzenterartigen Ansatz eines Einstellorgans für die Mischtemperatur anliegt, wobei das Einstellorgan um eine zur Thermostatlängsachse etwa senkrechte Achse drehbar am oder im Vorrichtungsgehäuse gelagert ist. Bei diesem Ausführungsbeispiel drückt der Kolben des thermostatischen Arbeitselements direkt oder indirekt gegen den Kolbenschieber des Mischers. Der hülsenförmige Halter muß so ausgebildet und angebracht sein, daß das thermostatische Arbeitselement die Temperatur des Mischwassers fehlerfrei fühlen kann. Außerdem muß das Mischwasser die betreffende Stelle der Mischvorrichtung zumindest ohne wesentliche Behinderung durchströmen können.

Um die erwähnten Bedingungen optimal zu gewährleisten, wird in weiterer Ausbildung der Erfindung vorgeschlagen, daß der Halter in Längsrichtung verlaufende Innenleisten od. dgl. Ansätze besitzt, die einerseits das Gehäuse des thermostatischen Arbeitselements zentrieren und andererseits Strömungskanäle für das vorbeiströmende Mischwasser bilden. Es ist zweckmäßig, wenn das gesamte Mischwasser durch diese Strömungskanäle fließt. Sie müssen deshalb entsprechend groß dimensioniert sein.

Das Gehäuse der herkömmlichen, mit Dehnstoff arbeitenden thermostatischen Arbeitselemente, besitzt in der Regel einen Außenbund. Dieser wird vielfach zu Befestigungszwecken ausgenutzt. Wenn die Innenleisten des Halters in Weiterbildung der Erfindung dessen rohrförmigen Teil entgegen der Strömungsrichtung überragen, so kann man das thermostatische Arbeitselement so tief in den Halter einschieben, bis sein Bund an den Stirnflächen der überstehenden Leistenenden aufliegt. Dadurch ist einerseits die Montageendlage einwandfrei vorgegeben und andererseits verbleiben dann zwischen den überstehenden Leistenenden Einströmöffnungen für das Mischwasser.

Der Exzenter oder exzenterartige Ansatz des Einstellorgans ist bei einer bevorzugten Ausführungsform der Erfindung in der Art eines Mehrkants ausgebildet, und der Halter stützt sich mit einer Gegenfläche an jeweils einer der von der Drehachse des Einstellorgans unterschiedlich weit entfernten Mehrkantflächen ab. Je weiter diese Mehrkantfläche von der Drehachse entfernt ist, umso stärker wird der Kolbenschieber gegen den Widerstand der Belastungsfeder in dem Mischerkörper hineingeschoben. Dadurch vergrößert sich dann auch die Gegenkraft am thermostatischen Arbeitselement, und das hat schließlich eine Erhöhung der Mischwassertemperatur zur Folge. Die Verringerung der Mischwassertemperatur erreicht man durch eine entsprechende Drehung des Exzenters bzw. exzenterartigen Ansatzes. Da bei dieser Einstelleinrichtung jeweils zwei Flächen aneinander anliegen und sie durch die Belastungsfeder gegeneinander gepreßt werden, bleibt der eingestellte Wert für das Mischwasser ohne besondere Vorkehrungen sicher erhalten. Bei einer anderen, sehr vorteilhaften Variante der erfindungsgemäßen Mischvorrichtung, deren Gehäuse im wesentlichen eine H-förmige Gestalt besitzt, wobei der eine H-Schenkel mit der Kaltwasserleitung und dem Kaltwasserstutzen des Warmwasserbereiters und der andere H-Schenkel mit dem Warmwasserstutzen des Warmwasserbereiters sowie einer Mischwasserabflußleitung verbunden und der H-Quersteg vom kalten Wasser durchflossen ist, besteht darin, daß der H-Quersteg im Bereich wenigstens eines H-Schenkels teleskopartig ausziehbar ist und die beiden Teleskopteile mittels mindestens eines Dichtringes gegeneinander abgedichtet sind. Herkömmliche Warmwasserbereiter besitzen üblicherweise je ein Anschlußrohr für das kalte und das austretende warme Wasser. Der Seitenabstand dieser Anschlußrohre ist nicht veränderbar, jedoch bei den einzelnen Fabrikaten verschieden. Die vorstehend beschriebene Ausbildung ermöglicht nun eine leichte Anpassung der erfindungsgemäßen Mischvorrichtung an die verschiedenen, im Handel gebräuchlichen Warmwasserbereiter.

Eine besonders zweckmäßige Weiterbildung der Erfindung besteht darin, daß der H-Quersteg einen Anschluß für ein Sicherheitsventil besitzt oder in sehr zweckmäßiger Art am H-Quersteg ein Sicherheitsventil, insbesondere Membran-Sicherheitsventil, unmittelbar befestigt ist. Dabei kann im letzteren Falle das Gehäuse des Sicherheitsventils zumindest teilweise einstückig mit dem H-Quersteg bzw. dem zugeordneten Teleskop-Teilstück des H-Querstegs gefertigt sein.

In der Zeichnung ist ein Ausführungsbeispiel der Erfindung dargestellt. Es zeigen:

Figur 1 eine Draufsicht auf die erfindungsgemäße Mischvorrichtung,

Figur 2 einen vertikalen Längsmittelschnitt durch die linke Bildhälfte der Fig. 1.

Beim Ausführungsbeispiel besitzt das Gehäuse der erfindungsgemäßen Mischvorrichtung eine im wesentlichen H-förmige Gestalt, wobei der eine H-Schenkel einen Kaltwasserzuflußstutzen 1 für eine Kaltwasserleitung 2 sowie einen Kaltwasserabflußstutzen 3 zur Verbindung mit dem Kaltwasseranschluß eines nicht gezeigten Warmwasserbereiters bildet. Der andere H-Schenkel bildet mit seinem oberen Ende einen Warmwasserzuflußstutzen 5 zur Verbindung mit dem Warmwasseranschluß des Warmwasserbereiters, während sein unteres Ende als Mischwasserabflußstutzen 4 dient. Letzterer is mit einer Mischwasserleitung 6 verbunden, jedoch könnte man ihm das Mischwasser auch unmittelbar entnehmen. Die Verbindungen erfolgen jeweils mit Hilfe von Überwurfverschraubungen 7. In weiterer Ausgestaltung kann man in den unteren Teil des einen H-Schenkels noch einen Absperrhahn 8 einbauen. Darüber hinaus kann man in sehr vorteilhafter Weise auch noch einen Anschlußstutzen 9 vorsehen, der den Anschluß einer weiterführenden Kaltwasserleitung ermöglicht und bei Nichtbedarf mit Hilfe eines Stopfens 10 verschlossen wird. Die beiden H-Schenkel sind mittels des H-Querstegs 11 hydraulisch verbunden. Da sich das Mischorgan 12 im anderen H-Schenkel befindet, wird der H-Quersteg 11 lediglich von Kaltwasser durchströmt.

Das Mischorgan 12 besitzt einen thermostatisch gesteuerten Schieber 13, der mit einem Mischerkörper 14 zusammenwirkt. Letzterer besitzt zwei umlaufende Reihen von Steueröffnungen 15 bzw. 16. Die Steueröffnungen haben eine im Querschnitt rechteckige Gestalt und es sind jeweils vier auf einer kreisförmigen Mantellinie des Mischerkörpers 14 angeordnet. Durch die Steueröffnungen 15 strömt das vom Warmwasserbereiter kommende warme Wasser von außen nach innen, während die Steueröffnungen 16 ebenfalls von außen nach innen vom kalten Wasser durchflossen werden.

Der Mischerkörper 14 und der als Kolbenschieber ausgebildete Schieber 13 besitzen jeweils eine im wesentlichen topfförmige Gestalt, wobei die freien Topfränder gegeneinander weisen und der Schieber 13 in den Mischerkörper 14 eingesteckt ist. Zwischen beide Teile ist eine Belastungsfeder 17 für ein thermostatisches Arbeitselement 18 eingesetzt. Sie wird durch zapfenförmige Ansätze 19 bzw. 20 zentriert und gehalten. Am Boden des Schiebers 13 sind Durchbrüche 21 vorgesehen, durch welche das Mischwasser austritt und die sich teilweise noch etwas in die Topfwandung hinein erstrecken. Der Abstand der beiden Reihen mit den Steueröffnungen 15 bzw. 16, in Verschieberichtung des Schiebers 13 gesehen, und die Abmessungen des Schiebers 13 sind nun so gewählt, daß die Steueröffnungen 16 vollständig freigegeben sind, wenn der Schieber die Steueröffnungen 15 ganz abdeckt und umgekehrt. Im einen Extremfalle tritt lediglich Kaltwasser ins Innere des Mischorgans, während im anderen Extremfalle nur heißes Wasser ins Mischorgan und aus diesem natürlich auch wieder ausfließt. Zwischenstellungen des Schiebers 13 ergeben mehr oder weniger warmes Mischwasser.

Der Mischerkörper besitzt an seinem oberen und unteren Ende sowie etwa in der Mitte drei Außenbünde 22, 23 und 24, die mit der sie umgebenden Gehäusebohrung 25 und der Zylinderaußenwandung 26 des Mischerkörpers zusammen zwei Ringkanäle 27 und 28 bilden. Über einen Durchbruch 29 der Gehäusewandung steht der Ringkanal 27 mit dem Innern des H-Querstegs und damit der Kaltwasserleitung in hydraulischer Verbindung.

Der Außenbund 24, der zugleich zur Abstützung des Mischerkörpers 14 an einer Schulter 30 des Vorrichtungsgehäuses dient, überragt den Boden 31 des Mischerkörpers. Außerdem ist dieser Außenbund an mehreren Stellen unterbrochen, um Strömungskanäle 33 für das in Richtung des Pfeils 32 ankommende Warmwasser zu schaffen. Der Weg, welchen das warme Wasser bis ins Innere des Mischorgans 12 zurücklegt, ist mit dem Pfeil 32 a markiert.

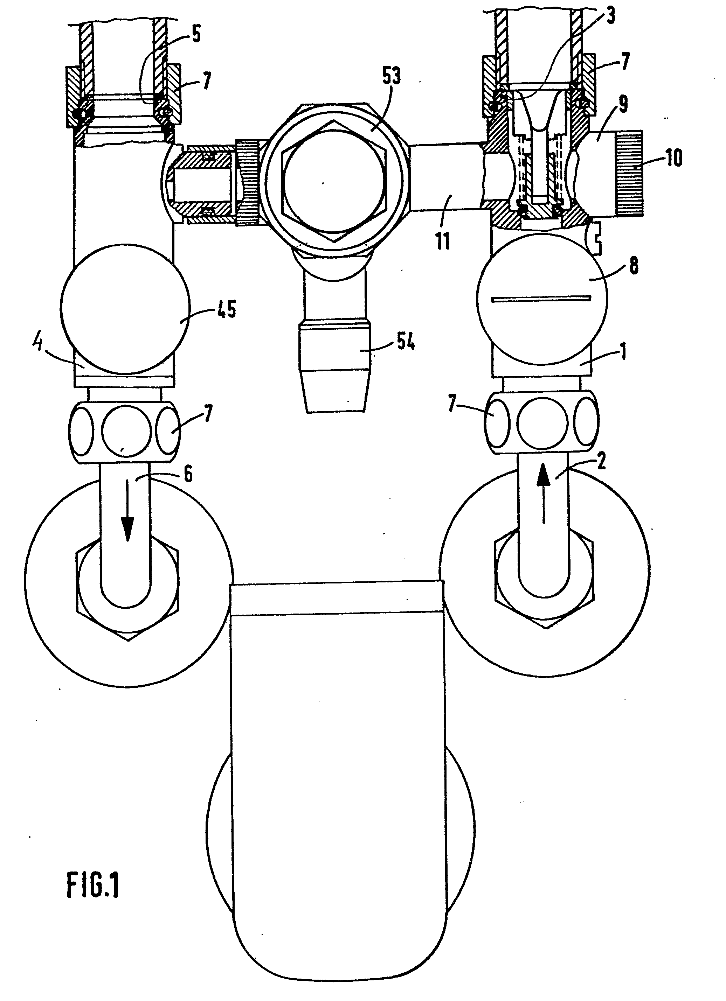

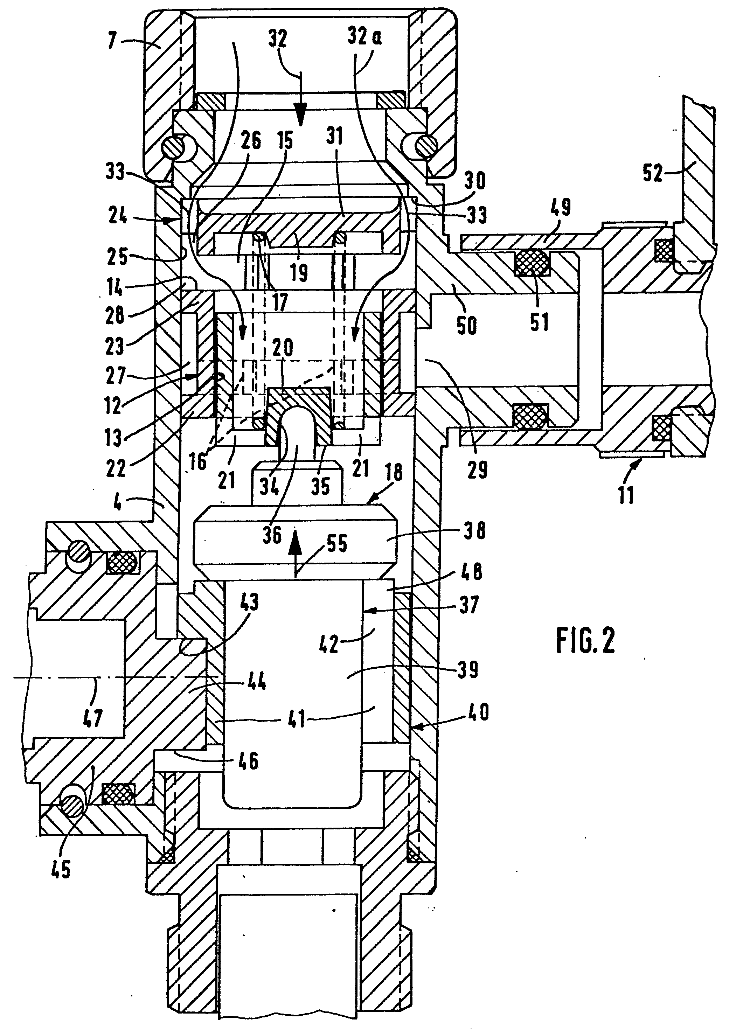

In eine Zentrierbohrung 34 des Bodens 35 des Schiebers 13 ist von außen her das freie Ende des in Pfeilrichtung 55 ausfahrenden Arbeitskolbens 36 eines thermostatischen Arbeitselements 37 eingesteckt. Sein mit einem Bund 38 versehenes Gehäuse 39 ist in einen hülsenförmigen Halter 40 eingesteckt. Er besitzt in Längsrichtung verlaufende innere Leisten 41, die einerseits das thermostatische Arbeitselement unmittelbar abstützen und andererseits Strömungskanäle 42 für das vom Mischorgan 12 kommende Wasser bilden. An der in Figur 2 linken Seite ist die Wandung des hülsenförmigen Halters 40 bis hin zu einer der Leisten 41 abgeflacht, so daß eine in Strömungsrichtung des Mischwassers weisende Fläche 43 entsteht. Daran liegt ein Exzenter 44 eines Einstellorgans 45 für die Mischwassertemperatur an. Es kann, wie Figur 1 zeigt, außen mit einer Skala versehen sein, die mit einer entsprechenden Marke am Gehäuse bzw. anderen H-Schenkel zusammenarbeitet. Die Mantelfläche 46 dieses Exzenters verläuft nicht stetig, vielmehr besteht sie aus mehreren, winklig zueinander stehenden Teilflächen. Jeweils eine davon kann an die Fläche 43 des Halters 40 angelegt werden. Da ihre Abstände von der Drehachse 47 des Einstellorgans 45 unterschiedlich weit entfernt sind, wird die Belastungsfeder 17 im Innern des Mischorgans 12 in Abhängigkeit von der Drehstellung des Einstellorgans 45 mehr oder weniger stark gespannt. Auf diese Weise erreicht man dann die Veränderung des Sollwerts. Die Belastungsfeder sorgt gleichzeitig auch für ein sattes Anliegen der Fläche 43 am Exzenter 44 und für eine in Achsrichtung spielfreie Verbindung zwischen dem Arbeitskolben 36 und dem Schieber 13. Die Drehachse 47 des Einstellorgans 45 verläuft beim Ausführungsbeispiel senkrecht zur Arbeitsrichtung des Arbeitskolbens 36. Die Leisten 41 des Halters 40 überragen letzteren, wobei ihre freien Stirnflächen Anschläge für den Bund 38 des thermostatischen Arbeitselements 37 bilden. Gleichzeitig entstehen auf diese Weise auch die notwendigen Einströmöffnungen 48 für das ausschließlich am Gehäuse des thermostatischen Arbeitselements vorbeigeführte Mischwasser.

Der H-Quersteg 11 des Gehäuses der erfindungsgemäßen Mischvorrichtung ist an wenigstens einer Stelle, vorzugsweise im Bereich des Mischorgans 12, teleskopartig ausziehbar. Dabei übergreift der einstückig mit dem einen H-Schenkel gefertigte, rohrförmige Teleskopteil 49 den an den anderen H-Schenkel angeformten Teleskopteil 50. Letzterer besitzt eine Ringnut zum Einsetzen eines Dichtrings 51, vorzugsweise O-Rings. Auf diese Weise läßt sich der gegenseitige Abstand der beiden H-Schenkel innerhalb bestimmter Grenzen variieren, so daß eine leichte Anpassung an den Seitenabstand des Kaltwasseranschlußes und Warmwasseranschlußes eines Warmwasserbereiters möglich ist. Im Bedarfsfalle könnte man am rechten Ende (Fig. 1) des H-Querstegs noch eine zweite Teleskopverbindung vorsehen, jedoch müßte dann das mittlere Teleskopteil nach dem Einstellen gegen Verschieben gesichert werden.

Der H-Quersteg besitz darüber hinaus noch einen Anschluß 52 für ein Sicherheitsventil 53 und einen zum Sicherheitsventil gehörenden Ablaufstutzen 54.

## Patentansprüche

1. Mischvorrichtung zur Verbindung mit wenigstens dem Warmwasseranschluß eines Warmwasserbereiters, mit einem Kaltwasser-Zuflußstutzen (1), einem Mischwasser-Abflußstutzen (4) und einem thermostatisch gesteuerten, mittels einer Belastungsfeder (17) beaufschlagten Schieber (13), an dem sich das eine Ende der Belastungsfeder abstützt, und der in einem Mischerkörper (14) verschiebbar ist, welcher wenigstens zwei an seiner Wandung in Verschieberichtung des Schiebers hintereinander angeordnete, umlaufende Reihen von Steueröffnungen (15, 16) aufweist, von denen durch den Schieber jeweils nur eine vollständig abdeckbar ist, wobei am oder im Bereich eines Bodens (35) des Schiebers (13) wenigstens ein Durchbruch (21) vorgesehen ist und jede Reihe von Steueröffnungen mit einem den Mischerkörper umgebenden Ringkanal (27, 28) in Verbindung steht, wobei außerdem der eine Ringkanal (27) mit dem Kaltwasser-Zuflußstutzen (1) und der andere (28) mit dem Warmwasseranschluß des Warmwasserbereiters hydraulisch verbunden ist, dadurch gekennzeichnet, daß die Ringkanäle (27, 28) durch die Außenwandung des Mischerkörpers (14) und drei im Abstand voneinander daran angebrachte Außenbünde (22, 23, 24) sowie eine zylindrische Gehäusebohrung (25) des Gehäuses der Mischvorrichtung gebildet sind und der Mischerkörper (14) an seinem vom Boden (35) des Schiebers (13) entfernten Ende mittels eines Bodens (31) verschlossen ist, wobei sich das andere Ende der Belastungsfeder (17) am Boden des Mischerkörpers abstützt, und daß der Schieber (13) als an seinen beiden Enden umströmbarer Einfachschieber ausgebildet ist.

2. Vorrichtung nach Anspruch 1, dadurch gekennzeichnet, daß einer der Außenbünde (22, 23, 24) dem Boden (31) des Mischerkörpers (14) zugeordnet ist und diesen insbesondere überragt, wobei dieser Außenbund (24) an einer inneren Schulter (30) des Mischergehäuses abgestützt ist und wenigstens an einer Stelle einen etwa in Achsrichtung des Schiebers (13) verlaufenden Strömungskanal (33) aufweist und der Boden (31) außen vom Warmwasser angeströmt ist.

3. Vorrichtung nach Anspruch 1 oder 2, dadurch gekennzeichnet, daß jeweils an der Innenseite der Böden (35, 31) des Schiebers (13) und des Mischerkörpers (14) ein mittiger Zentrieransatz (20 bzw. 19) für die als Schraubendruckfeder ausgebildete Belastungsfeder (17) angebracht, insbesondere angeformt ist.

4. Vorrichtung nach Anspruch 3 mit einem mittels eines Einstellorgans in Arbeitsrichtung gegen die Kraft der Belastungsfeder einstellbaren Arbeitselement, dadurch gekennzeichnet, daß der Boden (35) des Schiebers (13) außen eine Zentrierbohrung (34) besitzt, in die das freie Ende eines Arbeitskolbens (36) des thermostatischen Arbeitselements (37) eingreift.

5. Vorrichtung nach Anspruch 4, dadurch gekennzeichnet, daß das Gehäuse (39) des thermostatischen Arbeitselements (37) in einen hülsenförmigen Halter (40) eingesteckt ist und der Halter mit einer entgegen der Ausfahrrichtung (55) des Arbeitskolbens (36) weisenden Fläche (43) an einem Exzenter (44) oder exzenterartigen Ansatz eines Einstellorgans (45) für die Mischwassertemperatur anliegt, wobei das Einstellorgan um eine zur Thermostat-Längsachse etwa senkrechte Drehachse (47) drehbar am oder im Vorrichtungsgehäuse gelagert ist.

6. Vorrichtung nach Anspruch 5, dadurch gekennzeichnet, daß der Halter (40) in Längsrichtung verlaufende innere Leisten (41) aufweist, die einerseits das Gehäuse des thermostatischen Arbeitselements (37) zentrieren und andererseits Strömungskanäle für das vorbeiströmende Mischwasser bilden.

7. Vorrichtung nach Anspruch 6, dadurch gekennzeichnet, daß die inneren Leisten (41) des Halters (40) dessen rohrförmigen Teil entgegen der Strömungsrichtung (32) überragen.

8. Vorrichtung nach einem oder mehreren der Ansprüche 5 bis 7, dadurch gekennzeichnet, daß der Exzenter (44) oder exzenterartige Ansatz des Einstellorgans (45) in der Art eines Mehrkants ausgebildet ist und sich der Halter (40) mit einer Fläche (43) an jeweils einer von der Drehachse (47) des Einstellorgans unterschiedlich weit entfernten Mehrkantflächen abstützt.

9. Vorrichtung nach einem oder mehreren der vorhergehenden Ansprüche, deren Gehäuse im wesentlichen eine H-förmige Gestalt besitzt, wobei der eine H-Schenkel mit der Kaltwasserleitung (2) und dem Kaltwasseranschluß des Warmwasserbereiters und der andere H-Schenkel mit dem Warmwasseranschluß des Warmwasserbereiters sowie einer Mischwasser-Abflußleitung verbunden sind und der H-Quersteg vom kalten Wasser durchflossen ist, dadurch gekennzeichnet, daß der H-Quersteg (11) im Bereich wenigstens eines H-Schenkels teleskopartig ausziehbar ist und die beiden Teleskopteile (49, 50) mittels mindestens eines Dichtringes (51) gegeneinander abgedichtet sind.

10. Vorrichtung nach einem oder mehreren der vorhergehenden Ansprüche, dadurch gekennzeichnet, daß der H-Quersteg (11) einen Anschluß (52) für ein Sicherheitsventil (53) besitzt.

11. Vorrichtung nach einem oder mehreren der Ansprüche 1 bis 9, dadurch gekennzeichnet, daß am H-Quersteg (11) ein Sicherheitsventil (53), insbesondere Membran-Sicherheitsventil, befestigt ist.

**Claims**

1. Mixing device for connecting to at least the hot-water connection of a hot-water boiler, comprising a cold-water inlet stud (1), a mixed water outlet stud (4) and a thermostatic controlled slider (13) biased at one end by a load spring (17) and being displaceable in a mixing body (14), said body comprising at least two circular rows of control openings (15, 16) in its wall arranged one behind the other in the direction of the slider displacement with one of said control openings only being completely covered by the slider at each time, whereat at or in the area of the bottom (35) of the slider (13) at least one opening (21) is provided and each row of control openings is connected to a ring channel (27, 28) entouring the mixing body (14) and whereat one ring channel (27) is hydraulically connected to the cold-water inlet stud (1) and the other ring channel (28) is hydraulically connected to the hot-water connection, characterized in that the ring channels (27, 28) are formed by the outer wall of the mixing body (14) by three outer flanges (22, 23, 24) spaced apart from each other at said body and by a cylindrical bore (25) in the housing of the mixing device, that the mixing body (14) at its end opposite to the bottom (35) of the slider is closed by means of a bottom (31), whereat the other end of the load spring (17) is supported at the bottom of the mixing body and that the slider (13) is configured as a single-acting slider whereat the water can flow around both ends of the slider.

2. Device according to claim 1, characterized in that one of the outer flanges (22, 23, 24) is associated to the bottom (31) of the mixing body (14) and in particular exceeds said bottom whereat this outer flange (24) abuts against an inner shoulder (30) of the mixer housing and comprises at least at one position a flow channel (33) in axial direction of the slider (13) and whereat the hot water is flowing against the outside of the bottom (31).

3. Device according to claim 1 or 2, characterized in that at the inner side of the bottoms (35, 31) of the slider (13) and the mixing body (14) respectively a central spigot (20 resp. 19) is arranged, in particular tip-stretched, for the load spring (17) which is a helical compression spring.

4. Device according to claim 3 having a working element being adjustable in working direction by means of an adjusting element against the force of the load spring, characterized in that the bottom (35) of the slider (13) at its outer side has a centering bore (34) in which the free end of a working piston (36) of the thermostatic working element (37) engages.

5. Device according to claim 4, characterized in that the housing (39) of the thermostatic working element (37) is inserted in a shell-shaped support (40) and the support abuts with a face (43) opposite to the move out direction (55) of the working piston (36) against an eccentric (44) or an eccentric projection of an adjusting element (45) for the mixed water temperature, whereat the adjusting element is rotatably mounted at or in the housing of the device about a rotational axis (47) right-angled to the longitudinal axis of the thermostat.

6. Device according to claim 5, characterized in that the support (40) comprises inner ribs (41) extending longitudinal direction said ribs on one hand center the housing of the thermostatic working element (37) and on the other-hand form flow channels for the mixed water.

7. Device according to claim 6, characterized in that the inner ribs (41) of the support (40) exceed over its tube-shaped portion opposite to the flow direction (32).

8. Device according to one or a plurality of claims 5 to 7, characterized in that the eccentric (44) or the eccentric projection of the adjusting element (45) is configured in the form of a polygon and that the support (40) with a surface (43) abuts against one of several polygon surfaces which are differently wide spaced apart from the rotational axis (47) of the adjusting element.

9. Device according to one or a plurality of the preceding claims, the housing of said device having essentially an H-shaped configuration, whereat the one H-leg is connected to the cold water conduit (2) and to the cold water connection of the hot-water boiler and whereat the other H-leg is connected to the hot-water connection of the hot-water boiler as well as to the mixed water discharge conduit and the H-crossbar is traversed by the cold water, characterized in that the H-crossbar (11) in the area of at least one H-leg is telescopically extensible and that both telescopic portions (49, 50) are sealed from each other by means of at least one gasket (51).

10. Device according to one or a plurality of the preceding claims, characterized in that the H-crossbar (11) comprises a connection (52) for a safety valve (53).

11. Device according to one or a plurality of the claims 1 to 9, characterized in that a safety valve (53), in particular a diaphragm safety valve, is fixed to the H-crossbar (11).

**Revendications**

1. Dispositif mélangeur pour établir une liaison avec au moins le raccord d'eau chaude d'un préparateur d'eau chaude, avec un raccord d'arrivée d'eau froide (1), avec un raccord de décharge d'eau mélangée (4) et avec un tiroir commandé thermostatiquement, chargé par un ressort (17), et contre lequel s'appuie l'une des extrémités dudit ressort et qui est coulissable dans un corps du mélangeur (14) qui comporte au moins deux rangées périphériques d'orifices des distribution (15, 16) disposés l'un derrière l'autre dans sa paroi dans le sens de translation du tiroir et dont une seulement peut être complètement fermée par le tiroir, au moins un évidement (21) étant ménagé sur ou dans la zone d'un fond (35) du tiroir (13) et chaque rangée d'orifices de distribution étant en liaison avec un canal annulaire (27, 28) entourant le corps du mélangeur, l'un des canaux annulaires (27) étant en outre relié hydrauliquement avec le raccord d'arrivée d'eau froide (1) tandis que l'autre est relié hydrauliquement au raccord d'eau chaude du préparateur d'eau chaude, caractérisé en ce que les canaux annulaires (27, 28) sont formés par la paroi extérieure du corps de mélangeur (14) et par trois collets extérieurs (22, 23, 24) placés à une certaine distance l'un de l'autre sur cette paroi ainsi que par un trou cylindrique (25) du carter du dispositif mélangeur, et en ce que le corps de mélangeur (14) est, à son extrémité opposée au fond (35) du tiroir (13), fermé par un fond (31), l'autre extrémité du ressort de charge (17) s'appuyant contre le fond du corps de mélangeur, et en ce que le tiroir (13) est réalisé sous forme d'un tiroir simple suivant les deux extrémités duquel du fluide peut s'écouler.

2. Dispositif selon la revendication 1, caractérisé en ce qu'un des collets extérieurs (22, 23, 24) est associé au fond (31) du corps de mélangeur (14) et dépasse notamment de celui-ci, ce collet extérieur (24) s'appuyant contre un épaulement intérieur (30) du carter de mélangeur, et en ce qu'il comporte, au moins en un endroit, un canal d'écoulement (33) s'étendant suivant la direction axiale du tiroir (13) et en ce que le fond (31, 13) est balayé extérieurement par l'eau chaude.

3. Dispositif selon l'une des revendications 1 ou 2, caractérisé en ce qu'un appendice axial de centrage (20, 19) pour le ressort de charge (17) réalisé sous forme d'un ressort à boudin, est disposé, par exemple formé, sur le côté intérieur respectif des fonds (35, 31) du tiroir (13) et du corps de mélangeur (14).

4. Dispositif selon la revendication 3, comportant un élément de travail réglable par un organe de réglage dans la direction de travail contre la force du ressort de charge, caractérisé en ce que le fond (35) du tiroir (13) comporte extérieurement un trou de centrage (34) dans lequel s'engage l'extrémité libre d'un piston de travail (36) de l'élément thermostatique de travail (37).

5. Dispositif selon la revendication 4, caractérisé en ce que le carter (39) de l'élément thermostatique de travail (37) est emboîté dans un support (40) en forme de fourreau, et en ce que le support s'applique par une surface (43), dirigée en sens opposé à la direction de sortie (55) du piston de travail (36), contre un excentrique (44) ou contre un appendice en forme d'excentrique d'un organe de réglage (45) de la température d'eau mélangée, l'organe de réglage étant monté sur ou dans le carter de dispositif et à rotation autour d'un axe (47) à peu près perpendiculaire à l'axe longitudinal du thermostat.

6. Dispositif selon la revendication 5, caractérisé en ce que le support (40) comporte des voiles intérieurs (41) orientés dans la direction longitudinale et qui assurent d'une part le centrage du carter de l'élément thermostatique de travail (37) et forment d'autre part des canaux d'écoulement pour l'eau qui s'écoule.

7. Dispositif selon la revendication 6, caractérisé en ce que les voiles intérieurs (41) du support (40) dépassent de sa partie tubulaire dans une direction opposée à la direction d'écoulement (32).

8. Dispositif selon l'une quelconque des revendications 5 à 7, caractérisé en ce que l'excentrique (44) ou l'appendice en forme d'excentrique de l'organe de réglage (45) est réalisé sous forme d'un organe à pans multiples, et en ce que le support (40) s'appuie chaque fois par une surface (43) respective sur un des pans multiples qui sont éloignés de distances très différentes de l'axe de rotation (47) de l'organe de réglage.

9. Dispositif selon l'une quelconque des revendications 1 à 8, dont le carter a sensiblement une forme de H, l'une des branches du H étant reliée au tuyau d'eau froide (2) et au raccord d'eau froide du préparateur d'eau chaude tandis que l'autre branche du H est reliée au raccord d'eau chaude du préparateur d'eau chaude ainsi qu'à un tuyau de décharge d'eau mélangée tandis que la traverse du H est parcourue par de l'eau froide, caractérisé en ce que la traverse du H (11) peut être sortie de façon télescopique dans la zone d'au moins une branche du H et en ce que les deux parties télescopiques (49, 50) sont isolées entre elles de façon étanche par au moins une bague d'étanchéité (51).

10. Dispositif selon l'une quelconque des revendications 1 à 9, caractérisé en ce que la traverse du H (11) comporte un raccord (52) pour une soupape de sécurité (53).

11. Dispositif selon l'une quelconque des revendications 1 à 9, caractérisé en ce qu'une soupape de sécurité (53), en particulier une soupape de sécurité à membrane, est fixée sur la traverse (11) du H.

FIG.1

FIG.2